# EUROPEAN PATENT SPECIFICATION

(11) **EP 4 325 483 B1**
(45) Date of publication and mention of the grant of the patent: **25.03.2026**
(21) Application number: 22211049.6
(22) Date of filing: 02.12.2022
(51) Int. Cl.: G10L 15/22, G10L 15/183, G06F 3/16

(54) **SPEECH INTERACTION METHOD, SERVER, AND STORAGE MEDIUM**
SPRACHINTERAKTIONSVERFAHREN, SERVER UND SPEICHERMEDIUM
PROCÉDÉ D'INTERACTION VOCALE, SERVEUR ET SUPPORT DE STOCKAGE

(30) Priority: 17.08.2022 CN 202210985569
(43) Date of publication of application: 21.02.2024
(73) Proprietor: Guangzhou Xiaopeng Motors Technology Co., Ltd., Guangzhou, Guangdong 510000 (CN)
(72) Inventor: DING, Pengjie, Guangzhou, 510000 (CN); WANG, Tingyu, Guangzhou, 510000 (CN); LI, Yinyuyang, Guangzhou, 510000 (CN); ZHAO, Qun, Guangzhou, 510000 (CN)
(74) Representative: Ran, Handong

(56) References cited:
- EP-A2- 2 575 128
- US-B1- 10 332 513
- US-B2- 7 729 916

## Description

### Field of the Invention

The present disclosure relates to the technical field of speech interaction, and in particular to a speech interaction method, a server, and a storage medium.

### Background of the Invention

Navigation is a very common in-vehicle scenario for intelligent vehicles. A user, when navigating to a destination, is usually also concerned about weather conditions at the destination. However, in current speech interaction scenarios, the navigation function and the weather function are separated from each other. For example, after the user enables navigation, the navigation system replies "Navigating to the destination"; but when the user wants to check the weather at the destination and naturally asks "What's the weather like at the destination", he/she cannot get a desired reply but rather has to say the physical location of the destination and ask what is the weather like at this physical location. This brings a poor user experience.

Document EP 2 575 128 A2 describes a virtual assistant uses context information to supplement natural language or gestural input from a user. Context helps to clarify the user's intent and to reduce the number of candidate interpretations of the user's input, and reduces the need for the user to provide excessive clarification input. Context can be used to constrain solutions during various phases of processing, including, speech recognition, natural language processing, task flow processing, and dialog generation.

Document US 7 729 916 B2 discloses a conversational computing system that provides a universal coordinated multi-modal conversational user interface across a plurality of conversationally aware applications and conventional applications. The conversationally aware applications communicate with a conversational kernel via conversational application APIs. The conversational kernel converts voice requests into queries and converts outputs and results into spoken messages using conversational engines and conversational arguments. The conversational application API conveys all the information for the conversational kernel to transform queries into application calls and conversely convert output into speech, appropriately sorted before being provided to the user.

Document US 10 332 513 B1 describes methods and devices for enabling and disabling applications using voices. An individual speak an utterance to their electronic device, which may send audio data representing the utterance to a backend system. The backend system may generate text data representing the utterance, and may determine that an intent of the utterance was for an application to be enabled or disabled for their user account on the backend system. If the intent was to enable the application, the backend system may receive one or more rules for performing functionalities of the application, as well as one or more sample templates of sample utterances and sample responses that future utterances may use when requesting the application. One or more invocation phrases that may be used within the future utterances to invoke the application may be received, along with slot values for the sample templates.

### Summary of the Invention

Embodiments of the present disclosure provide a speech interaction method, a server, and a storage medium. Aspects of the invention are set out in the appended claims.

The embodiments of the present disclosure provide a speech interaction method. The speech interaction method includes the following steps: receiving a user speech request related to a first domain forwarded by a vehicle, and recognizing a keyword in the speech request; acquiring, by searching with the keyword, an application programming interface (API) for a second domain from a set of historical APIs for speech interactions; performing replacement of the keyword and slot identification on the speech request based on a parameter name and a parameter value in the acquired API to generate a new speech request; predicting an API for the new speech request; performing API parameter filling on the predicted API based on the parameter name and the parameter value in the acquired API as well as a result of the slot identification, and outputting and issuing a filling result to the vehicle to complete a speech interaction.

The speech interaction method of the present disclosure can realize cross-domain inheritance of an entity over a relatively long time span, and can thus meet users' needs during navigation for checking of weather at a destination and the like at any time after multiple rounds of speech interactions with the vehicle end, by way of which user experience can be improved.

The step of receiving a user speech request related to a first domain forwarded by a vehicle, and recognizing a keyword in the speech request, includes: receiving a user speech request related to a weather domain forwarded by a vehicle, and recognizing a keyword in the speech request. The step of acquiring, by searching with the keyword, an API for a second domain from a set of historical APIs for speech interactions, includes: acquiring, by searching with the keyword, an API for a navigation domain from a set of historical APIs for speech interactions.

In this way, cross-domain entity inheritance can be realized, which meets users' needs during navigation for checking of weather at a destination at any time after multiple rounds of speech interactions with the vehicle end. User experience is thus improved.

The step of recognizing a keyword in the speech request includes: performing speech recognition on the speech request and performing preprocessing to obtain a text to be processed; and performing keyword recognition on the text to be processed to obtain the keyword.

In this way, a relatively clear and accurate text to be processed can be acquired, and keyword recognition can be performed on the text to be processed to obtain a clear and accurate keyword.

The step of acquiring, by searching with the keyword, an API for a second domain from a set of historical APIs for speech interactions, includes: determining a domain corresponding to the keyword based on correspondences between preset keywords and application domains; and performing matching, for the domain corresponding to the keyword, in the set of historical APIs to obtain the API for the second domain.

In this way, the domain corresponding to the keyword can be determined based on the correspondences between the preset keywords and the application domains, and matching can be performed for the domain corresponding to the keyword in the set of historical APIs to obtain the API for the second domain. This overcomes the problem in the existing technologies that semantic inheritance can only inherit from one or two previous rounds or requires configuration of rules. Cross-domain entity inheritance is thus realized.

The step of performing replacement of the keyword and slot identification on the speech request based on a parameter name and a parameter value in the acquired API to generate a new speech request, includes: determining a parameter name in the acquired API that corresponds to the keyword; and performing replacement of the keyword and slot identification on the speech request based on a parameter value of the parameter name corresponding to the keyword to generate the new speech request.

In this manner, in the present disclosure, by determining the parameter name in the acquired API that corresponds to the keyword and then performing replacement of the keyword and slot identification on the speech request based on the parameter value of the parameter name corresponding to the keyword to generate a new speech request, speech interactions can be completed.

The step of predicting an API for the new speech request includes: encoding the new speech request as a text sequence to obtain a word feature vector; and processing, by a preset model, an input of the word feature vector to predict an API for the new speech request.

The speech interaction method of the present disclosure thus predicts an API for the new speech request based on an end-to-end preset model, by way of which cross-domain inheritance of an entity over a long time span can be achieved.

The step of performing API parameter filling on the predicted API based on the parameter name and the parameter value in the acquired API as well as a result of the slot identification, and outputting and issuing a filling result to the vehicle to complete a speech interaction, includes: determining a target parameter for slot filling based on the parameter name and the parameter value in the acquired API, a result of the slot identification, the predicted API, and a type of the predicted API; and performing API parameter filling on the predicted API based on the result of the slot identification and the target parameter, and outputting and issuing the filling result to the vehicle to complete the speech interaction.

In this way, in the present disclosure, the target parameter for slot filling can be determined based on the result of the slot identification performed on the user speech request related to the first domain, and based on the parameter name and the parameter value in the acquired API, the result of the slot identification, the predicted API, and the type of the predicted API; API parameter filling can then be performed on the predicted API, and finally a filling result can be output and issued to the vehicle to complete the speech interaction, by way of which cross-domain inheritance of an entity over a long time span can be realized.

The step of determining a target parameter for slot filling based on the parameter name and the parameter value in the acquired API, a result of the slot identification, the predicted API, and a type of the predicted API, includes: concatenating the parameter name and the parameter value in the acquired API and a slot value in the result of the slot identification into a text sequence, and encoding the text sequence to obtain a first feature vector; mapping a slot type in the result of the slot identification to a first identity, and converting the first identity to a second feature vector; mapping the type of the predicted API to a second identity, and converting the second identity to a third feature vector; mapping a parameter in the predicted API to a third identity, and converting the third identity to a fourth feature vector; and processing, by a slot filling model, the first feature vector, the second feature vector, the third feature vector, and the fourth feature vector to determine the target parameter.

The present disclosure, thus, by focusing on a slot filling model with an end-to-end architecture, proposes a slot filling scheme incorporating extra features. Compared with existing methods of determining only by a slot value and an API parameter, the present disclosure incorporates extra features such as the slot type in the result of the slot identification performed on the user speech request, the API type, and the API parameter, by way of which accuracy of slot filling tasks can be significantly improved and further accuracy of API parameter filling tasks can be improved.

The speech interaction method further includes: adding a target API on which the parameter filling was performed to the set of historical APIs, after the filling result is output and issued to the vehicle to complete the speech interaction.

In this manner, the API in the interaction method of the present disclosure can be iterative and can dynamically update the set of historical APIs corresponding to the current speech request. This is more convenient and efficient.

The present disclosure further provides a server. The server includes a processor and a memory that has a computer program stored thereon. The computer program, when executed by the processor, implements the speech interaction method according to any one of the above embodiments.

In this way, the server of the present disclosure, when using the above speech interaction method, can realize cross-domain inheritance of an entity over a long time span, and can thus meet users' needs during navigation for checking of weather at a destination and the like at any time after multiple rounds of speech interactions with the vehicle end. This improves user experience.

The present disclosure further provides a non-volatile computer-readable storage medium comprising a computer program. The computer program, when executed by one or more processors, implements the speech interaction method according to any one of the above embodiments.

In this way, the storage medium of the present disclosure, when using the above speech interaction method, can realize cross-domain inheritance of an entity over a long time span, and can thus meet users' needs during navigation for checking of weather at a destination and the like at any time after multiple rounds of speech interactions with the vehicle end. This improves user experience.

Additional aspects and advantages of the embodiments of the present disclosure will be partially given in the following description, and will partially become self-evident from the following description, or become understandable from the practice of the present disclosure.

### Brief Description of the Drawings

The above and/or additional aspects and advantages of the present disclosure will become apparent and easily understood from the description of the embodiments with reference to the accompanying drawings, in which:
Fig. 1 is a schematic flowchart of a speech interaction method of the present disclosure;
Fig. 2 is another schematic flowchart of the speech interaction method of the present disclosure;
Fig. 3 is further another schematic flowchart of the speech interaction method of the present disclosure;
Fig. 4 is further another schematic flowchart of the speech interaction method of the present disclosure;
Fig. 5 is further another schematic flowchart of the speech interaction method of the present disclosure;
Fig. 6 is further another schematic flowchart of the speech interaction method of the present disclosure;
Fig. 7 is further another schematic flowchart of the speech interaction method of the present disclosure;
Fig. 8 is further another schematic flowchart of the speech interaction method of the present disclosure;
Fig. 9 is a schematic structural diagram of a slot filling model used in the speech interaction method of the present disclosure; and
Fig. 10 is an overall schematic flowchart of the speech interaction method of the present disclosure.

### Detailed Description of the Embodiments

Embodiments of the present disclosure are described in described in detail below with examples thereof being shown in the accompanying drawings. In the drawings, same or similar reference numerals indicate same or similar elements or elements having same or similar functions. The embodiments described below by reference to the accompanying drawings are exemplary and are intended merely to explain the embodiments of the present disclosure, and therefore should not be construed as limiting the embodiments of the present disclosure.

For the technical problem with the speech interactions in the above described navigation process, a common solution is inheritance from multiple rounds of dialogs which is to inherit and rewrite an entity name of the destination to the "destination", so that the sentence becomes "What's the weather like at a physical location". However, during the navigation process, the user may have behaviors such as listening to music, answering the phone, chatting, conversing, etc., in which case there may have been multiple rounds or even a great many rounds of dialogs. The navigation scenario is continuous, and during the whole navigation process the user may ask about the weather at the destination at any time. Compared with semantic inheritance from one or two previous rounds of dialogs, the inheritance of the entity of the destination from multiple rounds or a great many rounds of dialogs is very difficult. Understandably, for a scheme adopting entity inheritance between adjacent speech requests, during the navigation process the user may ask about the weather at the destination in the middle of the journey, at which time the user may have had multiple speech interactions with the vehicle between the current speech request and a previous speech request that is related to the destination; in this case, inheritance of the entity of the destination from many previous rounds of dialog will be very difficult.

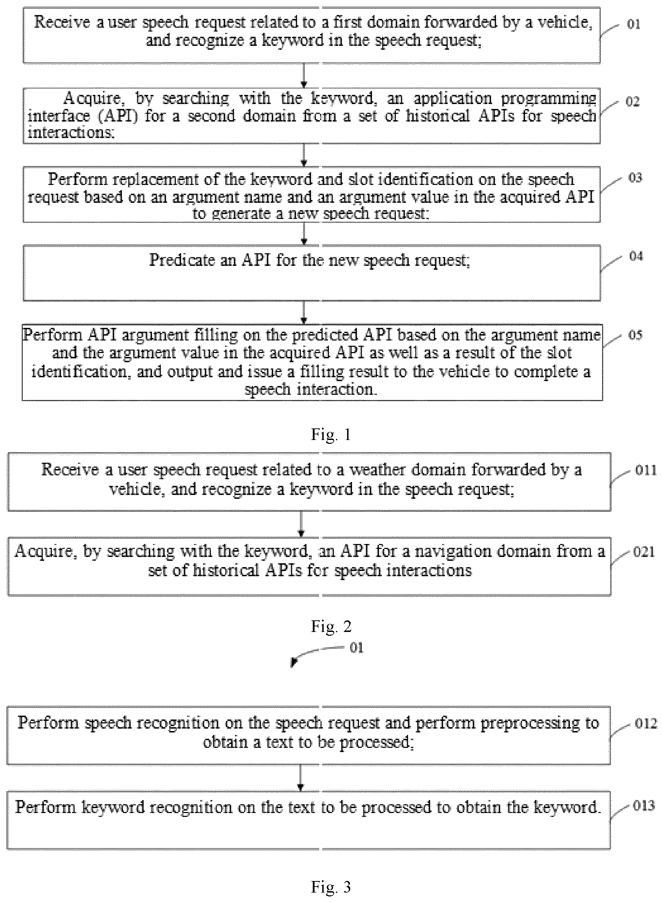

In view of the foregoing, the present disclosure provides, referring to Fig. 1, a speech interaction method. The speech interaction method includes the following steps.

In step 01, a user speech request related to a first domain forwarded by a vehicle is received, and a keyword in the speech request is recognized.

In step 02, an application programming interface (API) for a second domain is acquired, by searching with the keyword, from a set of historical APIs for speech interactions.

In step 03, replacement of the keyword and slot identification are performed on the speech request based on a parameter name and a parameter value in the acquired API to generate a new speech request.

In step 04, an API is predicted for the new speech request.

In step 05, API parameter filling is performed on the predicted API based on the parameter name and the parameter value in the acquired API as well as a result of the slot identification, and a filling result is output and issued to the vehicle to complete a speech interaction.

The present disclosure also provides a server. The server includes a processor, and a memory having a computer program stored thereon. The processor is configured to: receive a user speech request related to a first domain forwarded by a vehicle, and recognize a keyword in the speech request; acquire, by searching with the keyword, an API for a second domain from a set of historical APIs for speech interactions; perform replacement of the keyword and slot identification to the speech request based on a parameter name and a parameter value in the acquired API to generate a new speech request; predict an API for the new speech request; and perform API parameter filling on the predicted API based on the parameter name and the parameter value in the acquired API as well as a result of the slot identification, and output and issue a filling result to the vehicle to complete a speech interaction.

A user speech request related to a first domain forwarded by a vehicle is received, and a keyword in the speech request is recognized. User speech requests related to different domains may be matched with different keywords. The first domain includes domains such as navigation, music, weather, etc. For example, keywords that match user speech requests related to the navigation domain and the music domain may be those shown in Table 1. In the case of the navigation domain, matching keywords for a user speech request may include "destination", "there", and "that place"; and in the case of the music domain, matching keywords for a user speech request may include "sing a song", "play a song", and "play another song".

**Table 1**

| Serial No. | Domain | API fields | API No. | Keywords matched with API |
|---|---|---|---|---|
| 1 | Navigation | destination | 1 | "destination", "there", "that place" |
| 2 | Music | Song, singer | 2 | "sing a song", "play a song", "play another song" |

An API for a second domain is acquired, by searching with the keyword, from a set of historical APIs for speech interactions. The second domain is one different from the first domain. The second domain includes the navigation domain.

Understandably, the set of historical APIs is a set of APIs predicted and generated for the user's multiple rounds of historical speech requests after the user's multiple rounds of speech interactions. For example, in the process of navigating to the destination, the user may send multiple rounds of historical speech requests such as "open the window", "play Jay Chou's songs", "turn up the volume", etc. These historical speech requests correspond to specific historical APIs, respectively. These specific historical APIs may constitute a historical API set. It is therefore possible that a domain to which a current round of user speech request forwarded by the vehicle belongs may be different from a domain of an API corresponding to a previous round of speech request or a previous n^{th} round of speech request (n≥2) in the set of historical APIs.

An API for a second domain is acquired by searching with the keyword. For example, for a user speech request related to the first domain which is the weather domain, "What's the weather like at the destination", speech recognition is performed thereon and a keyword "destination" is extracted therefrom; an API for the second domain may then be determined by searching with this keyword from a set of historical APIs, the second domain being, for example, the navigation domain.

Then, replacement of the keyword as well as slot identification are performed on the speech request based on a parameter name and a parameter value in the acquired API to generate a new speech request. Specifically, if the parameter name in the acquired API for the second domain includes "destination", then the parameter value is a corresponding location name; and replacement of the keyword and slot identification are then performed on the speech request based on this parameter name and this parameter value to generate a new speech request. If the parameter name in the acquired API includes "song", then the parameter value is a corresponding song name; and replacement of the keyword and slot identification are then performed on the speech request based on this parameter name and this parameter value to generate a new speech request. For example, an acquired parameter value "Zhongguancun" is placed into the current speech request "What's the weather like at the destination" related to the first domain to form a new speech request "What's the weather like in Zhongguancun".

Finally, an API is predicted for the new speech request; and API parameter filling is performed on the predicted API based on the parameter name and the parameter value in the acquired API as well as a result of the slot identification, and a filling result is output and issued to the vehicle to complete THE speech interaction.

In the present disclosure, the API for the second domain associated with the keyword is determined by using the set of historical APIs, and the corresponding parameter name and parameter value are directly extracted from the API for the second domain associated with the keyword. In other words, the method of the present disclosure acquires the API for the second domain by keyword searching and acquires the corresponding parameter name and parameter value by directly extracting from the acquired API. Compared with extraction of an entity name by using an NER model, the method of present disclosure is faster. The method of the present disclosure adopts an end-to-end, direct API prediction mode, which is more efficient and convenient.

The speech interaction method and the server of the present disclosure can achieve cross-domain inheritance of an entity over a long time span, and can meet users' needs during navigation for checking of weather at a destination and the like at any time after multiple rounds of speech interactions with a vehicle end. This improves user experience.

Referring to Fig. 2, step 01 includes the following sub-step.

In sub-step 011, a user speech request related to a weather domain forwarded by a vehicle is received, and a keyword in the speech request is recognized.

Step 02 includes the following sub-step.

In sub-step 021, an API for a navigation domain is acquired by searching with the keyword from a set of historical APIs for speech interactions.

The processor is configured to: receive a user speech request related to a weather domain forwarded by a vehicle, and recognize a keyword in the speech request; and acquire, by searching with the keyword, an API for a navigation domain, from a set of historical APIs for speech interactions.

For example, for a user speech request related to the first domain which is the weather domain, "What's the weather like at the destination", speech recognition is performed thereon and a keyword "destination" is extracted therefrom; an API for the second domain may then be determined by searching with this keyword from a set of historical APIs, the second domain being, for example, the navigation domain.

In this way, cross-domain entity inheritance can be realized to meet users' needs during navigation for checking of weather at a destination at any time after multiple rounds of speech interactions with a vehicle end. This improves user experience.

Referring to Fig. 3, step 01 includes the following sub-steps.

In sub-step 012, speech recognition is performed on the speech request and preprocessing is performed to obtain a text to be processed.

In sub-step 013, keyword recognition is performed on the text to be processed to obtain the keyword.

The processor is configured to perform speech recognition on the speech request and perform preprocessing to obtain a text to be processed, and perform keyword recognition on the text to be processed to obtain a keyword.

First, automatic speech recognition (ASR) is performed on the speech request, and the recognized speech text is preprocessed to obtain a text to be processed. Considering that the speech text acquired through the ASR is not that clear and accurate due to factors such as hardware limitations of the vehicle, network instability, the user's colloquial or dialectal expressions, etc., it is necessary to perform conventional text error correction and remove some meaningless words such as "ah", "please", etc.

Then, keyword recognition is performed on the text to be processed to obtain a keyword.

In this way, a relatively clear and accurate text to be processed can be acquired, and keyword recognition can be performed on the text to be processed to obtain a clear and accurate keyword.

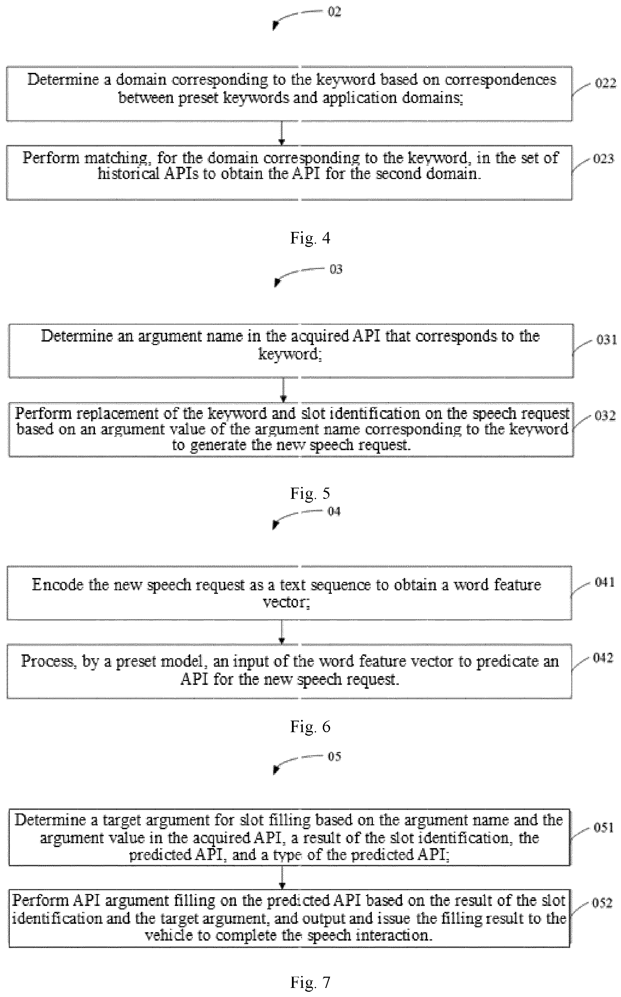

Referring to Fig. 4, step 02 includes the following sub-steps.

In sub-step 022, a domain corresponding to the keyword is determined based on correspondences between preset keywords and application domains.

In sub-step 023, matching for the domain corresponding to the keyword is performed in the set of historical APIs to obtain the API for the second domain.

The processor is configured to determine a domain corresponding to the keyword based on correspondences between preset keywords and application domains, and performing matching for the domain corresponding to the keyword in the set of historical APIs to obtain the API for the second domain.

The correspondences between the preset keywords and the application domains may form a table of correspondences between keywords and application domains. For example, an application domain corresponding to preset keywords "sing a song", "play a song", "play another song" is music playing, and an application domain corresponding to preset keywords "destination", "there", "that place" is navigation.

First, a domain corresponding to the keyword is determined based on correspondences between preset keywords and application domains. For example, if it is recognized that keywords in the current user speech request is "sing a song", then it can be determined based on the correspondences between the preset keywords and the application domains that the keywords "sing a song" are used for the application domain of music playing. That is, the domain corresponding to the keywords "sing a song" is the music domain. If it is recognized that the keywords in the current user speech request is "there", then it can be determined based on the correspondences between the preset keywords and the application domains that the keyword "there" is used for the application domain of navigation. That is, the domain corresponding to the keyword "there" is the navigation domain.

Then, after the domain corresponding to the keyword is determined, matching for the domain corresponding to the keyword may be performed in the set of historical APIs to obtain the API for the second domain. For example, if it is determined that the domain corresponding to the keyword "there" is the navigation domain, then matching can be performed in the set of historical APIs to obtain the API for the second domain which is a location-related API. For example, if a location-related API in the set of historical APIs is "Navigate to Zhongguancun", then it is determined that the API for the second domain includes "Navigate to Zhongguancun". One or more APIs may be obtained for the second domain. The number of the API obtained depends on the number of location-related interfaces in the set of historical APIs.

In this way, the domain corresponding to the keyword can be determined based on the correspondences between the preset keywords and the application domains, and matching can be performed for the domain corresponding to the keyword in the set of historical APIs to obtain the API for the second domain. This overcomes the problem in the existing technologies that semantic inheritance can only inherit from one or two previous rounds or requires configuration of rules. Cross-domain entity inheritance is thus realized.

Referring to Fig. 5, step 03 includes the following sub-steps.

In sub-step 031, a parameter name in the acquired API that corresponds to the keyword is determined.

In sub-step 032, replacement of the keyword as well as slot identification are performed on the speech request based on a parameter value of the parameter name corresponding to the keyword to generate a new speech request.

The processor is configured to determine a parameter name in the acquired API that corresponds to the keyword, and perform replacement of the keyword as well as slot identification on the speech request based on a parameter value of the parameter name corresponding to the keyword to generate a new speech request.

Understandably, each API for the second domain includes a parameter name and a parameter value. For example, an API for the navigation domain includes a plurality of parameter names and a plurality of parameter values. The parameter name "location" represents the current location, and the parameter name "destination" represents the destination.

Thus, for the aforementioned user speech request "What's the weather like in that place" in which the keywords are "that place", it can be determined that the parameter name in the acquired API that corresponds to the keywords "that place" is "destination"; and if the corresponding parameter value of the parameter name "destination" is "Zhongguancun", replacement of the keywords and slot identification can be performed on the speech request "What's the weather like in that place" to generate a new speech request "What's the weather like in Zhongguancun".

In addition, it should be noted that in the navigation scenario, since navigating to a place is a dynamic, real-time process, the API for navigating from the current location to the destination is always displayed. Therefore, chronologically speaking, navigation-related APIs are the most up-to-date and most readily acquirable interfaces.

In this manner, in the present disclosure, by determining the parameter name in the acquired API that corresponds to the keyword and then performing replacement of the keyword and slot identification on the speech request based on the parameter value of the parameter name corresponding to the keyword to generate a new speech request, speech interactions can be completed.

Referring to Fig. 6, step 04 includes the following sub-steps.

In sub-step 041, the new speech request is encoded as a text sequence to obtain a word feature vector.

In sub-step 042, an input of the word feature vector is processed by a preset model to predict an API for the new speech request.

The processor is configured to encode the new speech request as a text sequence to obtain a word feature vector, and process an input of the word feature vector by a preset model to predict an API for the new speech request.

For example, the new speech request "What's the weather like in Zhongguancun" obtained in the previous example is encoded as a text sequence to obtain a word feature vector "[CLS] What's the weather like in Zhongguancun [SEP]".

Then, an input of the word feature vector "[CLS] What's the weather like in Zhongguancun [SEP]" is processed by a preset model to predict an API for the new speech request "What's the weather like in Zhongguancun". The preset model is an end-to-end API prediction model.

The speech interaction method of the present disclosure thus predicts an API for the new speech request based on an end-to-end preset model, by way of which cross-domain inheritance of an entity over a long time span can be achieved.

Referring to Fig. 7, step 05 includes the following sub-steps.

In sub-step 051, a target parameter for slot filling is determined based on the parameter name and the parameter value in the acquired API, a result of the slot identification, the predicted API, and a type of the predicted API.

In sub-step 052, API parameter filling is performed on the predicted API based on the result of the slot identification and the target parameter, and a filling result is output and issued to the vehicle to complete the speech interaction.

The processor is configured to: determine a target parameter for slot filling based on the parameter name and the parameter value in the acquired API, a result of the slot identification, the predicted API, and a type of the predicted API; and perform API parameter filling on the predicted API based on the result of the slot identification and the target parameter, and output and issue a filling result to the vehicle to complete the speech interaction.

For example, if the parameter name in the acquired API is "destination", the parameter value of the acquired API is "Zhongguancun", the result of the slot identification performed on the speech request "What's the weather like in that place" is "that place", the API predicted for the new speech request "What's the weather like in Zhongguancun" is API A, and the type of the API A is navigation type, then it can be determined that the target parameter for API parameter slot filling on the API A is "destination".

Then, API parameter filling is performed on the predicted API A based on the result of the slot identification "that place" and the target parameter "destination", and a filling result is output and issued to the vehicle to complete the speech interaction.

In this way, in the present disclosure, the target parameter for slot filling can be determined based on the result of the slot identification performed on the user speech request related to the first domain, and based on the parameter name and the parameter value in the acquired API, the result of the slot identification, the predicted API, and the type of the predicted API; API parameter filling can then be performed on the predicted API, and finally a filling result can be output and issued to the vehicle to complete the speech interaction, by way of which cross-domain inheritance of an entity over a long time span can be realized.

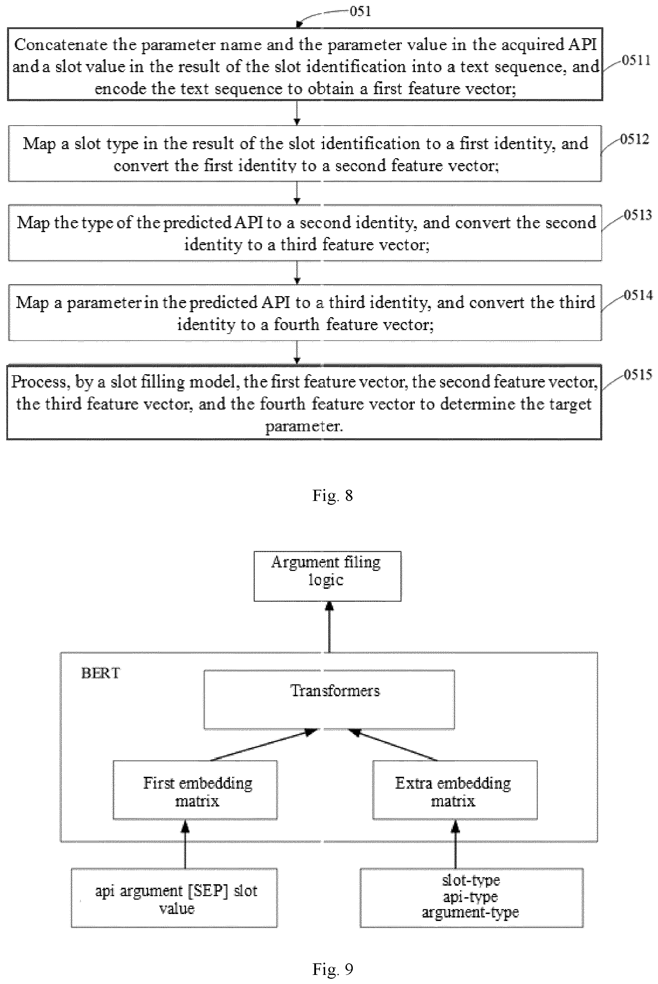

More specifically, referring to Fig. 8, sub-step 051 includes the following sub-steps.

In sub-step 0511, the parameter name and the parameter value in the acquired API and a slot value in the result of the slot identification are concatenated into a text sequence, and the text sequence is encoded to obtain a first feature vector.

In sub-step 0512, a slot type in the result of the slot identification is mapped to a first identity, and the first identity is converted to a second feature vector.

In sub-step 0513, the type of the predicted API is mapped to a second identity, and the second identity is converted to a third feature vector.

In sub-step 0514, a parameter in the predicted API is mapped to a third identity, and the third identity is converted to a fourth feature vector.

In sub-step 0515, the first feature vector, the second feature vector, the third feature vector, and the fourth feature vector are processed by a slot filling model to determine the target parameter.

The processor is configured to: concatenate the parameter name and the parameter value in the acquired API and a slot value in the result of the slot identification into a text sequence, and encode the text sequence to obtain a first feature vector; map a slot type in the result of the slot identification to a first identity, and convert the first identity to a second feature vector; map the type of the predicted API to a second identity, and convert the second identity to a third feature vector; map a parameter in the predicted API to a third identity, and convert the third identity to a fourth feature vector; and process the first feature vector, the second feature vector, the third feature vector, and the fourth feature vector by using a slot filling model to determine the target parameter.

Referring to Fig. 9, first, the parameter name and the parameter value in the acquired API and the slot value in the result of the slot identification are concatenated into a text sequence, and the text sequence is encoded to obtain a first feature vector "api parameter [SEP] slot value". For example, the result of the slot identification performed on the user speech request "What's the weather like at the destination" may be ["destination"--location (destination)]. That is, the result of the slot identification includes a slot value and a slot type. "Destination" is the slot value and location (destination) is the slot type. The parameter name in the acquired API is "destination" and the parameter value is "Zhongguancun". In other words, in the present disclosure, by concatenating the parameter name and the parameter value in the acquired API and the slot value using a first embedding matrix, a first feature vector "[CLS] destination Zhongguancun [SEP] destination [SEP]" can be obtained.

Then, slot type mapping and API type mapping are constructed, as shown in Fig. 9. In the present disclosure, an embedding matrix used for mapping of the slot type and the API type is an extra embedding matrix. In the present disclosure, by using the extra embedding matrix, the slot type in the result of the slot identification is mapped to the first identity namely "slot-type", and the first identity "slot-type" is converted to the second feature vector; the type of the predicted API is mapped to the second identity namely "api-type", and the second identity "api-type" is converted to the third feature vector; the parameter in the predicted API is mapped to the third identity namely "parameter-type", and the third identity "parameter-type" is converted to the fourth feature vector. Among them, the second feature vector, the third feature vector, and the fourth feature vector are used as extra feature vectors (Extra Embeddings).

Finally, the first feature vector, the second feature vector, the third feature vector, and the fourth feature vector are processed using the slot filling model to determine the target parameter. As shown in Fig. 9, parameter filling logic can be output and obtained by using the slot filling model. The target parameter can then be determined based on the parameter filling logic.

Understandably, the slot filling model used in the present disclosure is a pre-constructed and pre-trained slot filling model which can be used to determine the target parameter for slot filling on the target API to improve accuracy of subsequent slot filling tasks.

A specific structure of the slot filling model is shown in Fig. 9. The overall architecture of the slot filling model is based on the bidirectional encoder representations from transformers (BERT) model. An input to the slot filling model is the first feature vector "api parameter [SEP] slot value", and the aforementioned three extra feature vectors are incorporated into the slot filling model as extra features. In other words, the modeling method of the slot filling model incorporates tasks of semantic similarity discrimination of the extra features, and the parameter filling logic is output by the slot filling model. In this way, the API parameter filling task is accomplished.

The present disclosure, thus, by focusing on a slot filling model with an end-to-end architecture, proposes a slot filling scheme incorporating extra features. Compared with existing methods of determining only by a slot value and an API parameter, the present disclosure incorporates extra features such as the slot type in the result of the slot identification performed on the user speech request, the API type, and the API parameter, by way of which accuracy of slot filling tasks can be significantly improved and further accuracy of API parameter filling tasks can be improved.

The speech interaction method further includes the following step.

In step 06, after the filling result is output and issued to the vehicle to complete the speech interaction, the target API on which the parameter filling was performed is added to the set of historical APIs.

The processor is configured to add the target API on which the parameter filling was performed to the set of historical APIs, after the filling result is output and issued to the vehicle to complete the speech interaction.

After the filling result is output and issued to the vehicle to complete the speech interaction, the target API on which the parameter filling was performed is added to the set of historical APIs.

After the filling result is output and issued to the vehicle to complete the speech interaction, the target API on which the parameter filling was performed is added to the set of historical APIs. The target API may be used as a candidate API for a next round of no-entity user speech request.

In this manner, the API in the interaction method of the present disclosure can be iterative and can dynamically update the set of historical APIs corresponding to the current speech request. This is more convenient and efficient.

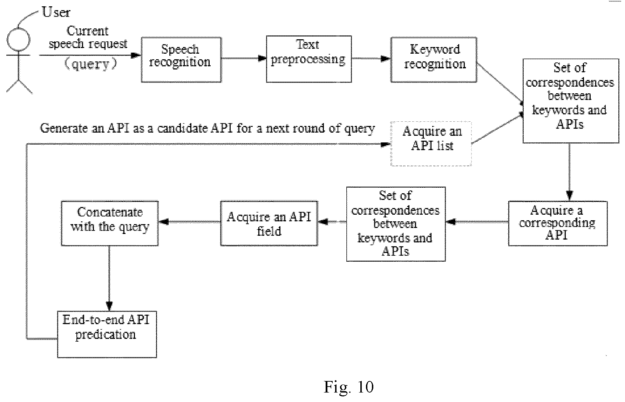

Furthermore, for ease of understanding, an overall flowchart of the interaction method of the present disclosure is shown in Fig. 10. In Fig. 10, "query" is the user speech request related to the first domain currently forwarded by the vehicle, and "API list" is the set of historical APIs.

The present disclosure also provides a non-volatile computer-readable storage medium having a computer program stored thereon. The computer program, when executed by one or more processors, implements the interaction method described in any of the above embodiments.

For example, the computer program, when executed by the processor, implements the following steps of the interaction method.

In step 01, a user speech request related to a first domain forwarded by a vehicle is received, and a keyword in the speech request is recognized.

In step 02, an API for a second domain is acquired, by searching with the keyword, from a set of historical APIs for speech interactions.

In step 03, replacement of the keyword and slot identification are performed on the speech request based on a parameter name and a parameter value in the acquired API to generate a new speech request.

In step 04, an API is predicted for the new speech request.

In step 05, API parameter filling is performed on the predicted API based on the parameter name and the parameter value in the acquired API as well as a result of the slot identification, and a filling result is output and issued to the vehicle to complete a speech interaction.

Understandably, the computer program includes computer program codes. The computer program codes may be in the form of source codes, object codes, an executable file, or may be in an intermediate form. The computer-readable storage medium may include: any entity or device capable of carrying computer program codes, a recording medium, a U disk, a removable hard disk, a magnetic disk, an optical disk, a computer memory, a read-only memory (ROM), a random access memory (RAM), a software distribution medium, etc.

The computer-readable storage medium of the present disclosure, when using the above speech interaction method, can realize cross-domain inheritance of an entity over a long time span, and can meet users' needs during navigation for checking of weather at a destination and the like at any time after multiple rounds of speech interactions with the vehicle end. This improves user experience.

## Claims

1. A speech interaction method, comprising the following steps:
receiving a user speech request related to a first domain forwarded by a vehicle and recognizing a keyword in the speech request (01);
acquiring, by searching with the keyword, an application programming interface for an application in a second domain from a set of historical application programming interfaces for speech interactions (02), wherein the second domain is different from the first domain;
performing replacement of the keyword in the speech request with a parameter value for a parameter name corresponding to the keyword, from the acquired application programming interface, to generate a new speech request, and performing slot identification on the speech request based on the parameter name and the parameter value (03);
predicting an application programming interface for the new speech request (04); and
performing application programming interface parameter filling on the predicted application programming interface based on the parameter name and the parameter value in the acquired application programming interface and a result of the slot identification, and outputting and issuing a filling result to the vehicle to complete a speech interaction (05).

2. The speech interaction method according to claim 1, wherein:
the step of receiving a user speech request related to a first domain forwarded by a vehicle and recognizing a keyword in the speech request (01) comprises:
receiving a user speech request related to a weather domain forwarded by a vehicle and recognizing a keyword in the speech request (011); and
the step of acquiring, by searching with the keyword, an application programming interface for an application in a second domain from a set of historical application programming interfaces for speech interactions (02) comprises:
acquiring, by searching with the keyword, an application programming interface for an application in a navigation domain from a set of historical application programming interfaces for speech interactions (021).

3. The speech interaction method according to claim 1, wherein the step of recognizing a keyword in the speech request (01) comprises:
performing speech recognition on the speech request and performing preprocessing to obtain a text to be processed (012); and
performing keyword recognition on the text to be processed to obtain the keyword (013).

4. The speech interaction method according to claim 1, wherein the step of acquiring, by searching with the keyword, an application programming interface for an application in a second domain from a set of historical application programming interfaces for speech interactions (02) comprises:
determining a domain corresponding to the keyword based on correspondences between preset keywords and application domains (022); and
performing matching, for the domain corresponding to the keyword, in the set of historical application programming interfaces to obtain the application programming interface for the application in the second domain (023).

5. The speech interaction method according to claim 1, wherein the step of performing replacement of the keyword in the speech request with a parameter value for a parameter name corresponding to the keyword, from the acquired application programming interface to generate a new speech request (03) comprises:
determining the parameter name in the acquired application programming interface that corresponds to the keyword (031).

6. The speech interaction method according to claim 1, wherein the step of predicting an application programming interface for the new speech request (04) comprises:
encoding the new speech request as a text sequence to obtain a word feature vector (041); and
processing, by a preset model, an input of the word feature vector to predict an application programming interface for the new speech request (042).

7. The speech interaction method according to claim 1, wherein the step of performing application programming interface parameter filling on the predicted application programming interface based on the parameter name and the parameter value in the acquired application programming interface and a result of the slot identification and outputting and issuing a filling result to the vehicle to complete a speech interaction (05) comprises:
determining a target parameter for slot filling based on the parameter name and the parameter value in the acquired application programming interface, a result of the slot identification, the predicted application programming interface, and a type of the predicted application programming interface (051); and
performing application programming interface parameter filling on the predicted application programming interface based on the result of the slot identification and the target parameter, and outputting and issuing the filling result to the vehicle to complete the speech interaction (052).

8. The speech interaction method according to claim 7, wherein the step of determining a target parameter for slot filling based on the parameter name and the parameter value in the acquired application programming interface, a result of the slot identification, the predicted application programming interface, and a type of the predicted application programming interface (051) comprises:
concatenating the parameter name and the parameter value in the acquired application programming interface and a slot value in the result of the slot identification into a text sequence, and encoding the text sequence to obtain a first feature vector (0511);
mapping a slot type in the result of the slot identification to a first identity, and converting the first identity to a second feature vector (0512);
mapping the type of the predicted application programming interface to a second identity, and converting the second identity to a third feature vector (0513);
mapping a parameter in the predicted application programming interface to a third identity, and converting the third identity to a fourth feature vector (0514); and
processing, by a slot filling model, the first feature vector, the second feature vector, the third feature vector, and the fourth feature vector to determine the target parameter (0515).

9. The speech interaction method according to claim 1, further comprising:
adding a target application programming interface on which the parameter filling was performed to the set of historical application programming interfaces, after the filling result is output and issued to the vehicle to complete the speech interaction.

10. An apparatus for speech interaction, comprising:
means for receiving a user speech request related to a first domain forwarded by a vehicle and recognizing a keyword in the speech request (01);
means for acquiring, by searching with the keyword, an application programming interface for an application in a second domain from a set of historical application programming interfaces for speech interactions (02), wherein the second domain is different from the first domain;
means for performing replacement of the keyword in the speech request with a parameter value of a parameter name corresponding to the keyword, from the acquired application programming interface, to generate a new speech request, and performing slot identification on the new speech request based on the parameter name and the parameter value (03);
means for predicting an application programming interface for the new speech request (04); and
means for performing application programming interface parameter filling on the predicted application programming interface based on the parameter name and the parameter value in the acquired application programming interface and a result of the slot identification, and outputting and issuing a filling result to the vehicle to complete a speech interaction (05).

11. The apparatus of claim 10, wherein:
the means for receiving a user speech request related to a first domain forwarded by a vehicle and recognizing a keyword in the speech request (01) comprises:
means for receiving a user speech request related to a weather domain forwarded by a vehicle and recognizing a keyword in the speech request (011); and
the means for acquiring, by searching with the keyword, an application programming interface for an application in a second domain from a set of historical application programming interfaces for speech interactions (02) comprises:
means for acquiring, by searching with the keyword, an application programming interface for an application in a navigation domain from a set of historical application programming interfaces for speech interactions (021).

12. The apparatus of claim 10, wherein the means for acquiring, by searching with the keyword, an application programming interface for an application in a second domain from a set of historical application programming interfaces for speech interactions (02) comprises:
means for determining a domain corresponding to the keyword based on correspondences between preset keywords and application domains (022); and
means for performing matching, for the domain corresponding to the keyword, in the set of historical application programming interfaces to obtain the application programming interface for the application in the second domain (023).

13. The apparatus of claim 10, wherein the means for performing replacement of the keyword and slot identification on the speech request (03) comprises:
means for determining the parameter name in the acquired application programming interface that corresponds to the keyword (031).

14. A server, comprising a processor and a memory that has a computer program stored thereon, wherein the computer program, when executed by the processor, implements the speech interaction method according to any one of claims 1 to 9.

15. A non-volatile computer-readable storage medium comprising a computer program, wherein the computer program, when executed by one or more processors, implements the speech interaction method according to any one of claims 1 to 9.

## Patentansprüche

1. Sprachinteraktionsverfahren, das die folgenden Schritte beinhaltet:
Empfangen einer von einem Fahrzeug weitergeleiteten Benutzersprachanforderung, die sich auf eine erste Domäne bezieht, und Erkennen eines Schlüsselworts in der Sprachanforderung (01);
Erfassen, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02), wobei sich die zweite Domäne von der ersten Domäne unterscheidet;
Ersetzen des Schlüsselworts in der Sprachanforderung durch einen Parameterwert (03) für einen Parameternamen entsprechend dem Schlüsselwort, aus der erfassten Anwendungsprogrammierschnittstelle, um eine neue Sprachanforderung zu erzeugen, und Durchführen einer Slot-Identifizierung an der Sprachanforderung auf der Basis des Parameternamens und des Parameterwerts (03);
Vorhersagen einer Anwendungsprogrammierschnittstelle für die neue Sprachanforderung (04); und
Durchführen einer Anwendungsprogrammierschnittstellen-Parameterfüllung an der vorhergesagten Anwendungsprogrammierschnittstelle auf der Basis des Parameternamens und des Parameterwerts in der erfassten Anwendungsprogrammierschnittstelle und eines Ergebnisses der Slot-Identifizierung, sowie Ausgeben und Übermitteln eines Füllungsergebnisses an das Fahrzeug, um eine Sprachinteraktion abzuschließen (05).

2. Sprachinteraktionsverfahren nach Anspruch 1, wobei:
der Schritt des Empfangens einer von einem Fahrzeug weitergeleiteten Benutzersprachanforderung, die sich auf eine erste Domäne bezieht, und des Erkennens eines Schlüsselworts in der Sprachanforderung (01) Folgendes beinhaltet:
Empfangen einer von einem Fahrzeug weitergeleiteten Benutzersprachanforderung, die sich auf eine Wetterdomäne bezieht, und Erkennen eines Schlüsselworts in der Sprachanforderung (011); und
der Schritt des Erfassens, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02) Folgendes beinhaltet:
Erfassen, durch Suchen mit dem Schlüsselwort, einer
Anwendungsprogrammierschnittstelle für eine Anwendung in einer Navigationsdomäne aus einem Satz von historischen
Anwendungsprogrammierschnittstellen für Sprachinteraktionen (021).

3. Sprachinteraktionsverfahren nach Anspruch 1, wobei der Schritt des Erkennens eines Schlüsselworts in der Sprachanforderung (01) Folgendes beinhaltet:
Durchführen von Spracherkennung an der Sprachanforderung und Durchführen von Vorverarbeitung, um einen zu verarbeitenden Text zu erhalten (012); und
Durchführen einer Schlüsselworterkennung an dem zu verarbeitenden Text, um das Schlüsselwort zu erhalten (013).

4. Sprachinteraktionsverfahren nach Anspruch 1, wobei der Schritt des Erfassens, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02) Folgendes beinhaltet:
Bestimmen einer Domäne entsprechend dem Schlüsselwort auf der Basis von Entsprechungen zwischen voreingestellten Schlüsselwörtern und Anwendungsdomänen (022); und
Durchführen eines Abgleichs, für die Domäne entsprechend dem Schlüsselwort, in dem Satz von historischen Anwendungsprogrammierschnittstellen, um die Anwendungsprogrammierschnittstelle für die Anwendung in der zweiten Domäne zu erhalten (023).

5. Sprachinteraktionsverfahren nach Anspruch 1, wobei der Schritt des Ersetzens des Schlüsselworts in der Sprachanforderung durch einen Parameterwert für einen Parameternamen entsprechend dem Schlüsselwort aus der erfassten Anwendungsprogrammierschnittstelle zum Erzeugen einer neuen Sprachanforderung (03) Folgendes beinhaltet:
Bestimmen des Parameternamens in der erfassten Anwendungsprogrammierschnittstelle, der dem Schlüsselwort entspricht (031).

6. Sprachinteraktionsverfahren nach Anspruch 1, wobei der Schritt des Vorhersagens einer Anwendungsprogrammierschnittstelle für die neue Sprachanforderung (04) Folgendes beinhaltet:
Codieren der neuen Sprachanforderung als eine Textsequenz, um einen Wortmerkmalsvektor zu erhalten (041); und
Verarbeiten, durch ein voreingestelltes Modell, einer Eingabe des Wortmerkmalsvektors, um eine Anwendungsprogrammierschnittstelle für die neue Sprachanforderung vorherzusagen (042).

7. Sprachinteraktionsverfahren nach Anspruch 1, wobei der Schritt des Durchführens einer Anwendungsprogrammierschnittstellen-Parameterfüllung an der vorhergesagten Anwendungsprogrammierschnittstelle auf der Basis des Parameternamens und des Parameterwerts in der erfassten Anwendungsprogrammierschnittstelle und eines Ergebnisses der Slot-Identifizierung und des Ausgebens und Übermittelns eines Füllungsergebnisses an das Fahrzeug zum Abschließen einer Sprachinteraktion (05) Folgendes beinhaltet:
Bestimmen eines Zielparameters für Slot-Füllung auf der Basis des Parameternamens und des Parameterwerts in der erfassten Anwendungsprogrammierschnittstelle, eines Ergebnisses der Slot-Identifizierung, der vorhergesagten Anwendungsprogrammierschnittstelle und eines Typs der vorhergesagten Anwendungsprogrammierschnittstelle (051); und
Durchführen einer Anwendungsprogrammierschnittstellen-Parameterfüllung an der vorhergesagten Anwendungsprogrammierschnittstelle auf der Basis des Ergebnisses der Slot-Identifizierung und des Zielparameters und Ausgeben und Übermitteln des Füllungsergebnisses an das Fahrzeug, um die Sprachinteraktion abzuschließen (052).

8. Sprachinteraktionsverfahren nach Anspruch 7, wobei der Schritt des Bestimmens eines Zielparameters für Slot-Füllung auf der Basis des Parameternamens und des Parameterwerts in der erfassten Anwendungsprogrammierschnittstelle, eines Ergebnisses der Slot-Identifizierung, der vorhergesagten Anwendungsprogrammierschnittstelle und eines Typs der vorhergesagten Anwendungsprogrammierschnittstelle (051) Folgendes beinhaltet:
Verknüpfen des Parameternamens und des Parameterwerts in der erfassten Anwendungsprogrammierschnittstelle und eines Slot-Werts im Ergebnis der Slot-Identifizierung zu einer Textsequenz und Codieren der Textsequenz, um einen ersten Merkmalsvektor zu erhalten (0511);
Zuordnen eines Slot-Typs im Ergebnis der Slot-Identifizierung zu einer ersten Identität und Umwandeln der ersten Identität in einen zweiten Merkmalsvektor (0512);
Zuordnen des Typs der vorhergesagten Anwendungsprogrammierschnittstelle zu einer zweiten Identität und Umwandeln der zweiten Identität in einen dritten Merkmalsvektor (0513);
Zuordnen eines Parameters in der vorhergesagten Anwendungsprogrammierschnittstelle zu einer dritten Identität und Umwandeln der dritten Identität in einen vierten Merkmalsvektor (0514); und
Verarbeiten, durch ein Slot-Füllungsmodell, des ersten Merkmalsvektors, des zweiten Merkmalsvektors, des dritten Merkmalsvektors und des vierten Merkmalsvektors, um den Zielparameter zu bestimmen (0515).

9. Sprachinteraktionsverfahren nach Anspruch 1, das ferner Folgendes beinhaltet:
Hinzufügen einer Zielanwendungsprogrammierschnittstelle, an der die Parameterfüllung durchgeführt wurde, zu dem Satz von historischen Anwendungsprogrammierschnittstellen, nachdem das Füllungsergebnis ausgegeben und an das Fahrzeug übermittelt wurde, um die Sprachinteraktion abzuschließen.

10. Vorrichtung für Sprachinteraktion, die Folgendes umfasst:
Mittel zum Empfangen einer von einem Fahrzeug weitergeleiteten Benutzersprachaufforderung, die sich auf eine erste Domäne bezieht, und zum Erkennen eines Schlüsselworts in der Sprachanforderung (01);
Mittel zum Erfassen, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02), wobei sich die zweite Domäne von der ersten Domäne unterscheidet;
Mittel zum Ersetzen des Schlüsselworts in der Sprachanforderung durch einen Parameterwert für einen Parameternamen entsprechend dem Schlüsselwort, aus der erfassten Anwendungsprogrammierschnittstelle, um eine neue Sprachaufforderung zu erzeugen, und Durchführen einer Slot-Identifizierung an der neuen Sprachanforderung auf der Basis des Parameternamens und des Parameterwerts (03);
Mittel zum Vorhersagen einer Anwendungsprogrammierschnittstelle für die neue Sprachanforderung (04); und
Mittel zum Durchführen einer Anwendungsprogrammierschnittstellen-Parameterfüllung an der vorhergesagten Anwendungsprogrammierschnittstelle auf der Basis des Parameternamens und des Parameterwerts in der erfassten Anwendungsprogrammierschnittstelle und eines Ergebnisses der Slot-Identifizierung, sowie Ausgeben und Übermitteln eines Füllungsergebnisses an das Fahrzeug, um eine Sprachinteraktion abzuschließen (05).

11. Vorrichtung nach Anspruch 10, wobei:
das Mittel zum Empfangen einer von einem Fahrzeug weitergeleiteten neuen Benutzersprachanforderung, die sich auf eine erste Domäne bezieht, und zum Erkennen eines Schlüsselworts in der Sprachanforderung (01) Folgendes umfasst:
Mittel zum Empfangen einer von einem Fahrzeug weitergeleiteten Benutzersprachanforderung, die sich auf eine Wetterdomäne bezieht, und zum Erkennen eines Schlüsselworts in der Sprachanforderung (011); und
das Mittel zum Erfassen, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02) Folgendes umfasst:
Mittel zum Erfassen, durch Suchen mit dem Schlüsselwort, einer Anwendungsprogrammierschnittstelle für eine Anwendung in einer Navigationsdomäne aus einem Satz von historischen
Anwendungsprogrammierschnittstellen für Sprachinteraktionen (021).

12. Vorrichtung nach Anspruch 10, wobei das Mittel zum Erfassen, durch Suchen mit dem Schlüsselwort, einer Anwendungsprogrammierschnittstelle für eine Anwendung in einer zweiten Domäne aus einem Satz von historischen Anwendungsprogrammierschnittstellen für Sprachinteraktionen (02) Folgendes umfasst:
Mittel zum Bestimmen einer Domäne entsprechend dem Schlüsselwort auf der Basis von Entsprechungen zwischen voreingestellten Schlüsselwörtern und Anwendungsdomänen (022); und
Mittel zum Durchführen eines Abgleichs, für die Domäne entsprechend dem Schlüsselwort, in dem Satz von historischen Anwendungsprogrammierschnittstellen, um die Anwendungsprogrammierschnittstelle für die Anwendung in der zweiten Domäne zu erhalten (023).

13. Vorrichtung nach Anspruch 10, wobei das Mittel zum Ersetzen des Schlüsselworts und zum Identifizieren des Slots in der Sprachanforderung (03) Folgendes umfasst:
Mittel zum Bestimmen des Parameternamens in der erfassten Anwendungsprogrammierschnittstelle, der dem Schlüsselwort entspricht (031).

14. Server, der einen Prozessor und einen Speicher umfasst, auf dem ein Computerprogramm gespeichert ist, wobei das Computerprogramm bei Ausführung durch den Prozessor das Sprachinteraktionsverfahren nach einem der Ansprüche 1 bis 9 implementiert.

15. Nichtflüchtiges, computerlesbares Speichermedium, das ein Computerprogramm umfasst, wobei das Computerprogramm bei Ausführung durch einen oder mehrere Prozessoren das Sprachinteraktionsverfahren nach einem der Ansprüche 1 bis 9 implementiert.

## Revendications

1. Procédé d'interaction vocale, comprenant les étapes suivantes consistant à :
recevoir une demande vocale d'utilisateur relative à un premier domaine transféré par un véhicule et reconnaître un mot-clé dans la demande vocale (01) ;
acquérir, par une recherche à l'aide du mot-clé, une interface de programmation d'application pour une application dans un second domaine, à partir d'un ensemble d'interfaces de programmation d'application historiques pour des interactions vocales (02), le second domaine étant différent du premier domaine ;
réaliser un remplacement du mot-clé dans la demande vocale par une valeur de paramètre (03) pour un nom de paramètre correspondant au mot-clé, à partir de l'interface de programmation d'application acquise, pour générer une nouvelle demande vocale, et réaliser une identification de créneau sur la demande vocale sur la base du nom de paramètre et de la valeur de paramètre (03) ;
prédire une interface de programmation d'application pour la nouvelle demande vocale (04) ; et
réaliser un remplissage de paramètre d'interface de programmation d'application sur l'interface de programmation d'application prédite, sur la base du nom de paramètre et de la valeur de paramètre dans l'interface de programmation d'application acquise et d'un résultat de l'identification de créneau, et délivrer en sortie et émettre un résultat de remplissage au véhicule pour achever une interaction vocale (05).

2. Procédé d'interaction vocale selon la revendication 1,
l'étape de réception d'une demande vocale d'utilisateur relative à un premier domaine transféré par un véhicule et de reconnaissance d'un mot-clé dans la demande vocale (01) comprenant l'étape consistant à :
recevoir une demande vocale d'utilisateur relative à un domaine météorologique transféré par un véhicule et reconnaître un mot-clé dans la demande vocale (011) ; et
l'étape d'acquisition, par une recherche à l'aide du mot-clé, d'une interface de programmation d'application pour une application dans un second domaine, à partir d'un ensemble d'interfaces de programmation d'application historiques pour des interactions vocales (02), comprenant l'étape consistant à :
acquérir, par une recherche à l'aide du mot-clé, une interface de programmation d'application pour une application dans un domaine de navigation, à partir d'un ensemble d'interfaces de programmation d'application historiques pour des interactions vocales (021).

3. Procédé d'interaction vocale selon la revendication 1, l'étape de reconnaissance d'un mot-clé dans la demande vocale (01) comprenant les étapes consistant à :
réaliser une reconnaissance vocale sur la demande vocale et réaliser un prétraitement pour obtenir un texte à traiter (012) ; et
réaliser une reconnaissance de mot-clé sur le texte à traiter pour obtenir le mot-clé (013).

4. Procédé d'interaction vocale selon la revendication 1, l'étape d'acquisition, par une recherche à l'aide du mot-clé, d'une interface de programmation d'application pour une application dans un second domaine, à partir d'un ensemble d'interfaces de programmation d'application historiques pour des interactions vocales (02), comprenant les étapes consistant à :
déterminer un domaine correspondant au mot-clé sur la base de correspondances entre des mots-clés prédéfinis et des domaines d'application (022) ; et
réaliser une correspondance, pour le domaine correspondant au mot-clé, dans l'ensemble d'interfaces de programmation d'application historiques, pour obtenir l'interface de programmation d'application pour l'application dans le second domaine (023).

5. Procédé d'interaction vocale selon la revendication 1, l'étape de réalisation d'un remplacement du mot-clé dans la demande vocale par une valeur de paramètre pour un nom de paramètre correspondant au mot-clé, à partir de l'interface de programmation d'application acquise, pour générer une nouvelle demande vocale (03), comprenant l'étape consistant à :
déterminer le nom de paramètre, dans l'interface de programmation d'application acquise, qui correspond au mot-clé (031).

6. Procédé d'interaction vocale selon la revendication 1, l'étape de prédiction d'une interface de programmation d'application pour la nouvelle demande vocale (04) comprenant les étapes consistant à :
coder la nouvelle demande vocale comme une séquence de texte pour obtenir un vecteur de caractéristiques de mot (041) ; et
traiter, selon un modèle prédéfini, une entrée du vecteur de caractéristiques de mot pour prédire une interface de programmation d'application pour la nouvelle demande vocale (042).

7. Procédé d'interaction vocale selon la revendication 1, l'étape de réalisation d'un remplissage de paramètre d'interface de programmation d'application sur l'interface de programmation d'application prédite, sur la base du nom de paramètre et de la valeur de paramètre dans l'interface de programmation d'application acquise et d'un résultat de l'identification de créneau, et de délivrance en sortie et d'émission d'un résultat de remplissage au véhicule pour achever une interaction vocale (05) comprenant les étapes consistant à :
déterminer un paramètre cible pour le remplissage de créneau sur la base du nom de paramètre et de la valeur de paramètre dans l'interface de programmation d'application acquise, d'un résultat de l'identification de créneau, de l'interface de programmation d'application prédite et d'un type de l'interface de programmation d'application prédite (051) ; et
réaliser un remplissage de paramètre d'interface de programmation d'application sur l'interface de programmation d'application prédite, sur la base du résultat de l'identification de créneau et du paramètre cible, et délivrer en sortie et émettre le résultat de remplissage au véhicule pour achever l'interaction vocale (052).

8. Procédé d'interaction vocale selon la revendication 7, l'étape de détermination d'un paramètre cible pour le remplissage de créneau sur la base du nom de paramètre et de la valeur de paramètre dans l'interface de programmation d'application acquise, d'un résultat de l'identification de créneau, de l'interface de programmation d'application prédite et d'un type de l'interface de programmation d'application prédite (051) comprenant les étapes consistant à :
concaténer le nom de paramètre et la valeur de paramètre dans l'interface de programmation d'application acquise et une valeur de créneau dans le résultat de l'identification de créneau en une séquence de texte, et coder la séquence de texte pour obtenir un premier vecteur de caractéristiques (0511) ;
mettre en correspondance un type de créneau dans le résultat de l'identification de créneau avec une première identité, et convertir la première identité en un deuxième vecteur de caractéristiques (0512) ;
mettre en correspondance le type de l'interface de programmation d'application prédite avec une deuxième identité, et convertir la deuxième identité en un troisième vecteur de caractéristiques (0513) ;
mettre en correspondance un paramètre dans l'interface de programmation d'application prédite avec une troisième identité, et convertir la troisième identité en un quatrième vecteur de caractéristiques (0514) ; et
traiter, par un modèle de remplissage de créneau, le premier vecteur de caractéristiques, le deuxième vecteur de caractéristiques, le troisième vecteur de caractéristiques et le quatrième vecteur de caractéristiques pour déterminer le paramètre cible (0515).

9. Procédé d'interaction vocale selon la revendication 1, comprenant en outre l'étape consistant à :
ajouter, à l'ensemble d'interfaces de programmation d'application historiques, une interface de programmation d'application cible sur laquelle le remplissage de paramètre a été réalisé, après que le résultat de remplissage a été délivré en sortie et émis vers le véhicule pour achever l'interaction vocale.

10. Appareil d'interaction vocale, comprenant :
un moyen permettant de recevoir une demande vocale d'utilisateur relative à un premier domaine transféré par un véhicule et de reconnaître un mot-clé dans la demande vocale (01) ;
un moyen permettant d'acquérir, par une recherche à l'aide du mot-clé, une interface de programmation d'application pour une application dans un second domaine, à partir d'un ensemble d'interfaces de programmation d'application historiques pour des interactions vocales (02), le second domaine étant différent du premier domaine ;
un moyen permettant de réaliser un remplacement du mot-clé dans la demande vocale par une valeur de paramètre d'un nom de paramètre correspondant au mot-clé, à partir de l'interface de programmation d'application acquise, pour générer une nouvelle demande vocale, et de réaliser une identification de créneau sur la nouvelle demande vocale sur la base du nom de paramètre et de la valeur de paramètre (03) ;
un moyen permettant de prédire une interface de programmation d'application pour la nouvelle demande vocale (04) ; et
un moyen permettant de réaliser un remplissage de paramètre d'interface de programmation d'application sur l'interface de programmation d'application prédite, sur la base du nom de paramètre et de la valeur de paramètre dans l'interface de programmation d'application acquise et d'un résultat de l'identification de créneau, et de délivrer en sortie et d'émettre un résultat de remplissage au véhicule pour achever une interaction vocale (05).

11. Appareil selon la revendication 10,
le moyen permettant de recevoir une demande vocale d'utilisateur relative à un premier domaine transféré par un véhicule et de reconnaître un mot-clé dans la demande vocale (01) comprenant :
un moyen permettant de recevoir une demande vocale d'utilisateur relative à un domaine météorologique transféré par un véhicule et de reconnaître un mot-clé dans la demande vocale (011) ; et
le moyen permettant d'acquérir, par une recherche à l'aide du mot-clé, une interface de programmation d'application pour une application dans un second domaine, à partir d'un ensemble d'interfaces de programmation d'application historiques pour des interactions vocales (02), comprenant :
un moyen permettant d'acquérir, par une recherche à l'aide du mot-clé, une interface de programmation d'application pour une application dans un domaine de navigation, à partir d'un ensemble d'interfaces de programmation d'application historiques pour des interactions vocales (021).

12. Appareil selon la revendication 10, le moyen permettant d'acquérir, par une recherche à l'aide du mot-clé, une interface de programmation d'application pour une application dans un second domaine, à partir d'un ensemble d'interfaces de programmation d'application historiques pour des interactions vocales (02), comprenant :
un moyen permettant de déterminer un domaine correspondant au mot-clé sur la base de correspondances entre des mots-clés prédéfinis et des domaines d'application (022) ; et
un moyen permettant de réaliser une correspondance, pour le domaine correspondant au mot-clé, dans l'ensemble d'interfaces de programmation d'application historiques, pour obtenir l'interface de programmation d'application pour l'application dans le second domaine (023).

13. Appareil selon la revendication 10, le moyen permettant de réaliser un remplacement du mot-clé et une identification de créneau sur la demande vocale (03) comprenant :
un moyen permettant de déterminer le nom de paramètre, dans l'interface de programmation d'application acquise, qui correspond au mot-clé (031).

14. Serveur, comprenant un processeur et une mémoire sur laquelle est stocké un programme informatique, le programme informatique, lorsqu'il est exécuté par le processeur, mettant en œuvre le procédé d'interaction vocale selon l'une quelconque des revendications 1 à 9.

15. Support de stockage non volatil lisible par ordinateur, comprenant un programme informatique, le programme informatique, lorsqu'il est exécuté par un ou plusieurs processeurs, mettant en œuvre le procédé d'interaction vocale selon l'une quelconque des revendications 1 à 9.
